# EUROPÄISCHE PATENTSCHRIFT

(11) **EP 2 162 973 B1**
(45) Veröffentlichungstag und Bekanntmachung des Hinweises auf die Patenterteilung: **13.11.2019**
(21) Anmeldenummer: 08761333.7
(22) Anmeldetag: 24.06.2008
(51) Int. Cl.: H02K 9/20, H02K 55/04

(54) **ELEKTRISCHE MASCHINE MIT SUPRALEITENDER ROTORWICKLUNG**
ELECTRIC MACHINE COMPRISING A SUPERCONDUCTING ROTOR WINDING
MACHINE ÉLECTRIQUE À ENROULEMENT ROTORIQUE SUPRACONDUCTEUR

(30) Priorität: 29.06.2007 DE 102007030474
(43) Veröffentlichungstag der Anmeldung: 17.03.2010
(73) Patentinhaber: Siemens Aktiengesellschaft, 80333 München (DE)
(72) Erfinder: FRANK, Michael, 91080 Uttenreuth (DE); VAN HASSELT, Peter, 91058 Erlangen (DE)
(86) Internationale Anmeldenummer: PCT/EP2008/058020
(87) Internationale Veröffentlichungsnummer: WO 2009/003877

(56) Entgegenhaltungen:
- US-A- 4 380 712
- US-B2- 6 553 773

## Beschreibung

Die Erfindung betrifft eine elektrische Maschine mit einem Rotor, der eine im Betrieb auf Kryotemperatur gekühlte supraleitende Rotorwicklung enthält.

Elektrische Maschinen bzw. Generatoren oder Elektromotoren, z.B. Synchronmaschinen können heute mit supraleitenden Komponenten, z.B. einer Rotorwicklung ausgestattet werden. Um die Rotorwicklung auf Betriebstemperatur abzukühlen, ist ein Kühlsystem nötig. Eine übliche Ausprägung derartiger Kühlsysteme verwendet z.B. einen sogenannten Thermosyphon und arbeitet mit zweiphasigem Kühlmedium, beispielsweise Helium, Wasserstoff, Neon, Stickstoff oder Argon. In der Regel weist ein entsprechender Rotor eine im Bereich der Rotorwicklung angeordnete Kühlkammer auf, in welche flüssiges Kühlmedium eingeleitet wird, dort zur Kühlung verdampft und dann zurück zu einem Kaltkopf geführt wird, um das Kühlmedium wieder zu verflüssigen.

Bei Inbetriebnahme der Maschine befinden sich zunächst alle Komponenten der Maschine und des Kühlsystems auf Raumtemperatur. Nach dem Einschalten des Kühlsystems kühlen zunächst die sogenannten Kaltköpfe ab und beginnen bei hinreichend tiefer Temperatur mit der Verflüssigung des Arbeitsgases.

Da die Dichte des Arbeitsgases mit fallender Temperatur und insbesondere bei der Verflüssigung zunimmt, ist es bekannt, bei Raumtemperatur ein entsprechend großes Gasvolumen in einem externen am Kühlsystem angebrachten Vorratsbehälter vorzuhalten, damit eine hinreichende Menge an verflüssigtem Arbeitsgas, also flüssigem Kühlmittel, beim Betrieb der Maschine zur Verfügung steht. Im Ausgleichsdruckbehälter befindet sich das Kühlmedium in der Regel sowohl während des Betriebs als auch bei Stillstand der Maschine in gasförmigem Zustand auf Umgebungstemperatur. Mit einem derartigen Puffersystem ist zumindest ein System realisiert, welches "auf Knopfdruck" funktioniert, d.h. der Anwender muss sich nicht um Nachfüllen bzw. Ablassen von Kühlmedium kümmern. Letztlich muss er die Maschine inkl. Kühlsystem nach initialer Befüllung lediglich einschalten.

Um das Totvolumen, also das im Betrieb eigentlich nicht benötigte Volumen des Kühlkreislaufs, einer derartigen Anordnung klein zu halten, ist ein möglichst hoher Ausgangsdruck bei Raumtemperatur anzustreben. Das Ausgleichsgefäß wird deshalb in der Regel als Druckbehälter ausgeführt. Der Ausgleichsdruckbehälter ist außerhalb der elektrischen Maschine angeordnet und mit dem Kühlsystem, welches in den rotierenden Rotor der Maschine führt, über eine entsprechende Anschlussleitung verbunden.

Alternativ ist es bekannt, während der Inbetriebnahme der Maschine Arbeitsgas aus einem Vorrat nachzufüllen. Hier obliegt es dem Anlagenbetreiber, sich um das Nachfüllen von Gas zu kümmern.

Bei Stilllegung der Maschine muss dann das verdampfende Arbeitsgas wieder im Vorratsbehälter, z.B. einer Gasflasche oder einem Druckgefäß, gespeichert werden oder alternativ abgeblasen werden. Insbesondere beim Nachfüllen und Ablassen von Arbeitsgas muss sich der Anwender um die Bevorratung von Arbeitsgas kümmern. Außerdem ist Arbeitsgas in der Regel teuer, so dass ein Abblasen zu vermeiden ist. Bekannt ist daher auch, das abgeblasene Arbeitsgas wieder in eine Vorratsflasche zurückzuführen, dies erfordert jedoch die Verwendung eines externen Kompressors.

Die US 6 553 773 B2 offenbart eine elektrische Maschine gemäß dem Oberbegriff des Anspruchs 1.

Aus der US 4380712A ist ein Kühlsystem für eine supraleitende Rotorwicklung einer elektrischen Maschine bekannt, welches einen Puffertank für das Kühlmittel aufweist, welches dort zur Kühlung der Rotorwicklung nach dem Thermosiphon-Prinzip eingesetzt wird. Dieser Puffertank ist innerhalb des "kalten" Kernstücks des Rotors angeordnet.

Aufgabe der vorliegenden Erfindung ist es daher, eine verbesserte elektrische Maschine mit supraleitender Rotorwicklung anzugeben.

Die Aufgabe wird gelöst durch eine elektrische Maschine mit einem Rotor, wobei der Rotor eine im Betrieb auf Umgebungstemperatur befindliche Welle umfasst. Weiterhin enthält die Maschine eine fest an der Welle angeordnete, im Betrieb auf Kryotemperatur gekühlte supraleitender Rotorwicklung. Die elektrische Maschine umfasst außerdem ein Kühlsystem zur Kühlung der Rotorwicklung, wobei das Kühlsystem einen Ausgleichsdruckbehälter für Kühlmedium umfasst. Erfindungsgemäß ist die Welle zumindest in einem Teilabschnitt als Hohlwelle mit einer Aussparung für den Ausgleichsdruckbehälter ausgebildet, wobei entweder der Ausgleichsdruckbehälter in der Aussparung des hohlen Bereichs der Welle angeordnet ist oder die Aussparung den Ausgleichsdruckbehälter bildet.

Die Welle ist das Teil der Maschine, der im Betrieb Kühlmedium zuzuführen ist. Durch die Anordnung oder Bildung des Ausgleichsdruckbehälters direkt in dieser Welle entfällt die Notwendigkeit einer externen, zum Ausgleichsdruckbehälter führenden Verbindungsleitung. Der in der Welle angeordnete oder gebildete Druckbehälter bevorratet somit das Arbeitsgas möglichst nahe an dem Ort, an dem es beim Einschalten und Betreiben der Maschine auch benötigt wird.

Die Welle ist zumindest in einem Teilabschnitt als Hohlwelle ausgebildet und weist dort in ihrem hohlen Bereich eine Aussparung für den Ausgleichsdruckbehälter auf oder bildet den Ausgleichsdruckbehälter. Diese Ausgestaltung der Erfindung beruht auf der Erkenntnis, eine ohnehin vorhandene Welle der elektrischen Maschine in ihrem Durchmesser zu erweitern und als Hohlwelle auszuführen oder in einer ohnehin vorhandenen Hohlwelle den Hohlraum zu vergrößern oder zu nutzen, um dort den Ausgleichsdruckbehälter anzuordnen oder zu bilden. Hierdurch wird unter anderem das notwendige Zusatzvolumen für einen externen Druckbehälter eingespart. Die Wandstärke der Welle muss lediglich auf ihre Stützfunktion hin ausreichend dimensioniert sein.

Eine weitere Einsparung von Material wird dadurch erreicht, wenn die eben genannte Aussparung den Ausgleichsdruckbehälter bildet. In der Hohlwelle wird daher kein separater Ausgleichsdruckbehälter eingesetzt, sondern die Hohlwelle an sich als Ausgleichsdruckbehälter benutzt.

Die Aussparung kann zylinderförmig und zur Mittellängsachse des Rotors konzentrisch sein, was eine besonders einfache und hinsichtlich der elektrischen Maschine günstige Ausgestaltung der Hohlwelle erlaubt.

Da der Ausgleichsdruckbehälter mit dem Kühlsystem durch eine Leitung verbunden sein muss, um den Austausch von Arbeitsgas zu ermöglichen, kann der Ausgleichsdruckbehälter mit dem Kühlsystem auch durch einen Kanal verbunden sein, wobei der Kanal eine Aussparung im Rotor ist. Auch hierdurch werden separate Bauteile für den Kanal bzw. die Verbindungsleitung eingespart.

Der Kanal kann zur Mittellängsachse des Rotors konzentrisch sein. Auch hier bringt die konzentrische Anordnung des Kanals besonders einfache Herstellung und günstige mechanische Eigenschaften für die rotierende Welle mit sich.

Ein Thermosyphonsystem verfügt in der Regel über ein zentral entlang der Mittellängsachse im Rotor verlaufendes Kühlrohr zum Transport von Kühlmedium in den Bereich der Rotorwicklung. Der Ausgleichsdruckbehälter kann daher derart ausgestaltet sein, dass er von einem derartigen Kühlrohr durchsetzt ist. Der Transport von Kühlmedium wird dann durch den Ausgleichsbehälter nicht behindert.

Im Falle eines Kühlrohrs kann der Verbindungskanal zwischen Ausgleichsdruckbehälter und Kühlsystem das Kühlrohr konzentrisch umfassen.

Da in der Regel die B-Seite des Rotors ungenutzt ist bzw. lediglich dem Anschluss des Kühlsystems dient, kann der Ausgleichsdruckbehälter am B-seitigen Ende des Rotors angeordnet sein.

Bei elektrischen Maschinen ist es bekannt, das B-seitige Ende des Rotors im Durchmesser gegenüber dem A-seitigen Ende zu reduzieren, da diese Welle nur Stützfunktion hat und keine Drehmomentübertragung übernimmt. Durch Integration des Ausgleichsdruckbehälters kann in der erfindungsgemäßen Maschine das B-seitige Ende des Rotors den gleichen Durchmesser wie das A-seitige Ende aufweisen, was einerseits Platz für den Ausgleichsdruckbehälter bzw. einen entsprechenden Hohlraum bietet und andererseits den Vorteil mit sich bringt, dass die Lagerschalen für die A-seitige und B-seitige Welle die gleiche Größe aufweisen und damit deren Bevorratung vereinfacht wird.

Bei einer Durchführung eines Kühlrohres kann das Innenvolumen der Hohlwelle, also der Ausgleichsdruckbehälter gegen den Außenraum, also die Atmosphärenseite mittels einer in diesem Fall ohnehin notwendigen Drehdurchführung abgedichtet werden. Am Wellenende ist damit der Ausgleichsdruckbehälter gegen die Atmosphäre abgedichtet.

Für eine weitere Beschreibung der Erfindung wird auf die Ausführungsbeispiele der Zeichnung verwiesen. Es zeigen, jeweils in einer schematischen Prinzipskizze:
Fig. 1 eine elektrische Maschine mit im Rotor integriertem Ausgleichsbehälter,
Fig. 2 eine alternative Ausführung für die B-seitige Welle der Maschine aus Fig. 1,
Fig. 3 eine alternative Ausführungsform mit separatem, aber integriertem Ausgleichsbehälter.

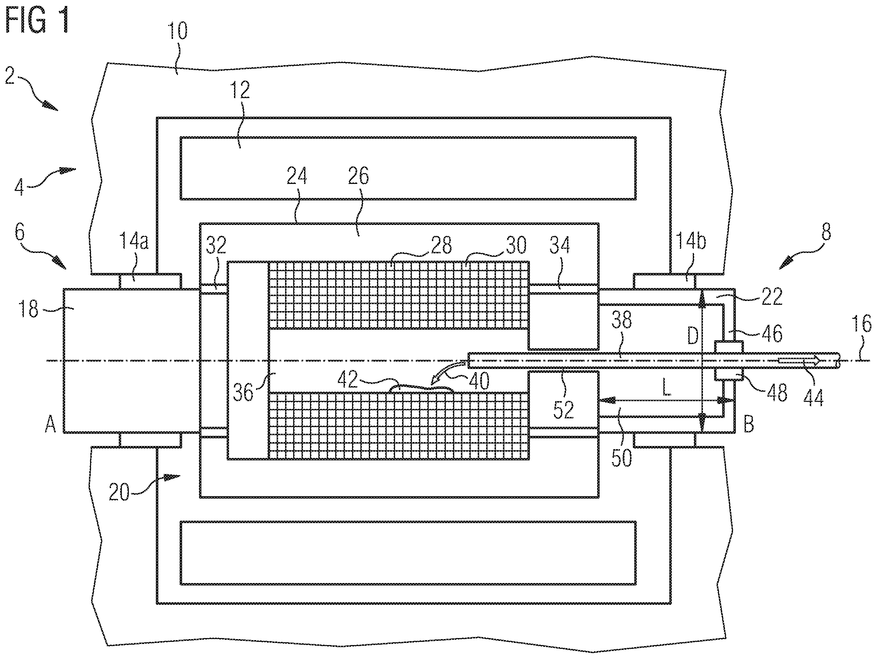

Fig. 1 zeigt als Beispiel für eine elektrische Maschine einen Elektromotor 2 mit einem Stator 4, einem Rotor 6 und einem auf den Rotor 6 einwirkenden Kühlsystem 8.

Der Stator 4 umfasst ein feststehendes Statorgehäuse 10, in welchem eine Statorwicklung 12 fest verankert ist. Sowohl an der A-Seite A als auch an der B-Seite B des Elektromotors 2 sind im Statorgehäuse 10 je ein Lager 14a,b befestigt, in welchem der Rotor 6 um seine Mittellängsachse 16 drehbar gelagert ist.

Der Rotor 6 umfasst an der A-Seite eine AS-Welle 18, welche im Lager 14a fixiert ist und zur Abgabe des vom Elektromotor 2 erzeugten Drehmoments dient. Der Rotor 6 weist im Wesentlichen drei axial hintereinander liegende Teilstücke auf. An die AS-Welle 18 schließt sich im Inneren des Elektromotors 2 ein Kernstück 20 an, welches sowohl mit der AS-Welle 18 als auch mit der sich wiederum hieran anschließenden BS-Welle 22 fest verbunden ist. Die BS-Welle 22 wiederum ist im Lager 14b im Stator 4 gehalten.

Das Kernstück 20 umfasst eine Rotoraußenwand 24, welche ein Isoliervakuum 26 umschließt. Im Isoliervakuum 26 ist ohne Berührung zur Rotoraußenwand eine Rotorkaltmasse 28 gehalten. Die Rotorkaltmasse 28 stellt unter anderem die eigentliche supraleitende Rotorwicklung 30 dar, welche im Betrieb durch das Kühlsystem 8 auf Kryotemperatur abgekühlt ist. Zur Übertragung eines vom Elektromotor 2 an der Rotormasse 28 erzeugten Drehmoments auf die AS-Welle 18 ist diese mit der Rotorkaltmasse 28 über ein thermisch isolierendes Drehmoment-Übertragungselement 32 verbunden. B-seitig ist die Rotorkaltmasse 28 mit der BS-Welle 22 lediglich abstützend über eine Kaltteilabstützung 34 verbunden.

Das Kühlsystem 8 umfasst eine in der Rotorkaltmasse 28 zentral bezüglich der Mittellängsachse 16 angeordnete Kühlkammer 36. In diese wird durch ein mit dem Stator 4 ruhendes Kühlrohr 38 in Richtung des Pfeils 40 flüssiges Neon 42 als Kühlmedium bei einer Temperatur von ca. -250°C eingeleitet, welches in der Kühlkammer 36 die Rotorwicklung 30 auf Kryotemperatur kühlt, dort verdampft und in Richtung des Pfeils 44 durch das Kühlrohr 38 wieder zurückströmt. Der Pfeil 40 ist also die Strömungsrichtung des flüssigen, der Pfeil 44 des gasförmigen Neons. Das Kühlrohr 38 führt außerhalb des Rotors 6 zu einem nicht dargestellten Kaltkopf, in welchem das in Richtung des Pfeils 44 geströmte gasförmige Neon 42 wieder in flüssiges Neon 42 abgekühlt wird. Da der Rotor 6 zusammen mit der BS-Welle 22 rotiert, ist das ruhende Kühlrohr 38 in der BS-Welle 22 am B-seitigen Ende 46, auch BS-Ende genannt, durch eine gasdichte Drehdurchführung 48 um die Mittellängsachse 16 drehbar gelagert.

Das Kühlsystem 8 umfasst weiterhin ein Arbeitsgaspuffervolumen 50, welches im Inneren der als Hohlwelle ausgebildeten BS-Welle 22 angeordnet ist. Das Arbeitsgaspuffervolumen 50 ist durch einen, die Rotoraußenwand 24 in Richtung der Mittellängsachse 16 durchsetzenden, das Kühlrohr 38 konzentrisch umfassenden Kanal 52 verbunden. Der Kanal 52 stellt mit anderen Worten einen Radialspalt zwischen Kühlrohr 38 und Rotoraußenwand 24 dar. Durch den Kanal 52 kann Neon 42 zwischen dem Arbeitsgaspuffervolumen 50, welches sich stets auf Umgebungstemperatur des Elektromotors 2 befindet, und der Kühlkammer 36 zirkulieren.

Bei Inbetriebnahme des Elektromotors 2 befinden sich zunächst dessen sämtliche Teile auf Umgebungstemperatur. Das im Arbeitsgaspuffervolumen 50 mit Überdruck befindliche Neon 42 diffundiert dann sukzessive durch den Kanal 52 in die Kühlkammer 36 und über das Kühlrohr 38 zum nicht dargestellten Kaltkopf, um dort sukzessive abgekühlt zu werden, bis genügend flüssiges Neon 42 entsteht und die Kühlkammer 36 auf Kryotemperatur abgekühlt ist.

Nach dem Abschalten des Elektromotors 2 erwärmt sich dieser wieder allmählich auf Umgebungstemperatur, weshalb sämtliches flüssiges Neon 42 verdampft und über den Kanal 52 zurück zum Arbeitsgaspuffervolumen 50 strömt, um dort gespeichert zu werden.

Bei einer beispielhaften Dimensionierung des Elektromotors 2 bezüglich der BS-Welle 22 weist diese beispielsweise eine Länge L von 50cm und einen Durchmesser D von 30-40cm auf.

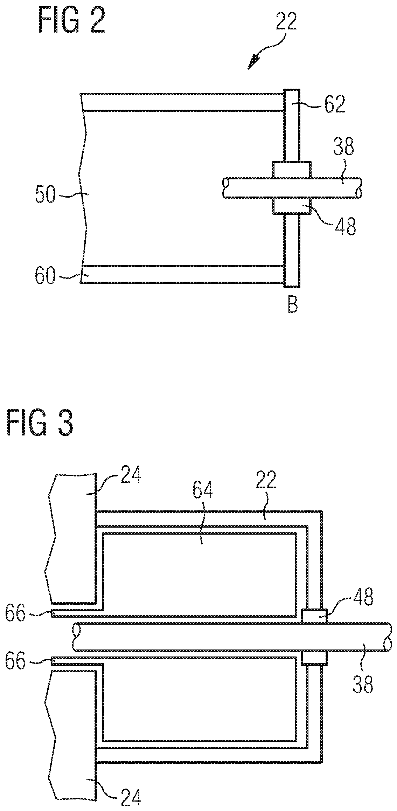

In einer in Fig. 2 gezeigten alternativen Ausführungsform ist die BS-Welle 22 zweiteilig ausgeführt, nämlich mit einem zylindrischen Wellenteil 60, an welches ein die Drehdurchführung 48 tragender Flansch 62 angeschlossen ist. Eine derartig gestaltete BS-Welle 22 ist deutlich einfacher herzustellen, muss jedoch am Flansch 62 gut abgedichtet sein, damit kein Neon 42 aus dem Arbeitsgaspuffervolumen 50 entweichen kann.

In einer weiteren, in Fig. 3 gezeigten Ausführungsform ist nicht die BS-Welle 22 selbst als Arbeitsgaspuffervolumen 50 ausgebildet, sondern der dem Arbeitsgaspuffervolumen 50 entsprechende Hohlraum ist als Aufnahme für einen Druckbehälter 64 ausgebildet. Der Druckbehälter 64 nimmt das gasförmige Neon 42 auf und ist über eine separate Verbindungsleitung 66 mit der Kühlkammer 36 verbunden. Alternativ kann in nicht dargestellter Weise der Druckbehälter 64 auch an den Kanal 52 aus Fig. 1 angeschlossen sein.

## Patentansprüche

1. Elektrische Maschine (2) mit einem Rotor (6), der eine im Betrieb auf Umgebungstemperatur befindliche Welle (18, 22) und eine fest an der Welle (18, 22) angeordnete, im Betrieb auf Kryotemperatur gekühlte supraleitende Rotorwicklung (30) enthält, und mit einem Kühlsystem (8) zur Kühlung der Rotorwicklung (30), das einen Ausgleichsdruckbehälter (50, 64) für Kühlmedium (42) umfasst,
**dadurch gekennzeichnet, dass** die Welle (18, 22) zumindest in einem Teilabschnitt (22) als Hohlwelle mit einer Aussparung (50) für den Ausgleichsdruckbehälter (50, 64) ausgebildet ist,
wobei entweder der Ausgleichsdruckbehälter (64) in der Aussparung (50) des hohlen Bereichs der Welle (18, 22) angeordnet ist oder die Aussparung (50) den Ausgleichsdruckbehälter (50, 64) bildet.

2. Maschine (2) nach Anspruch 1, bei der die Aussparung (50) zylinderförmig und zur Mittellängsachse (16) des Rotors (6) konzentrisch ist.

3. Maschine (2) nach einem der vorhergehenden Ansprüche, bei der der Ausgleichsdruckbehälter (50, 64) mit dem restlichen Kühlsystem (8) durch einen Kanal (52, 66) verbunden ist, wobei der Kanal (52,66) eine Aussparung (52) im Rotor (6) ist.

4. Maschine (2) nach Anspruch 3, bei der der Kanal (52, 66) zur Mittellängsachse (16) des Rotors (6) konzentrisch ist.

5. Maschine (2) nach einem der vorhergehenden Ansprüche, mit einem den Ausgleichsdruckbehälter (50, 64) durchsetzenden Kühlrohr (38) zum Transport von Kühlmedium (42) in den Bereich der Rotorwicklung (30).

6. Maschine (2) nach Anspruch 3 oder 4 und 5, bei der der Kanal (52,66) das Kühlrohr (38) konzentrisch umfasst.

7. Maschine (2) nach einem der vorhergehenden Ansprüche, bei der der Ausgleichsdruckbehälter (50, 64) am B-seitigen Ende (B) des Rotors (6) angeordnet ist.

8. Maschine (2) nach einem der vorhergehenden Ansprüche, bei der der Rotor (6) B-seitig (B) den gleichen Durchmesser (D) wie A-seitig (A) aufweist.

## Claims

1. Electrical machine (2) having a rotor (6) which contains a shaft (18, 22), which is at ambient temperature during operation, and a superconducting rotor winding (30), which is arranged fixed on the shaft (18, 22) and is cooled to a cryogenic temperature during operation, and having a cooling system (8) for cooling the rotor winding (30), which cooling system (8) comprises an equalization pressure container (50, 64) for cooling medium (42), wherein either the equalization pressure container (64) is arranged in the cutout (50) of the hollow region of the shaft (18, 22)
**characterized in that**, at least in one subsection (22), the shaft (18, 22) is in the form of a hollow shaft with a cutout (50) for the equalization pressure container (50, 64),
or the cutout (50) forms the equalization pressure container (50, 64).

2. Machine (2) according to Claim 1, wherein the cutout (50) is cylindrical and is concentric with respect to the center longitudinal axis (16) of the rotor (6).

3. Machine (2) according to one of the preceding claims, wherein the equalization pressure container (50, 64) is connected to the rest of the cooling system (8) by means of a channel (52, 66), wherein the channel (52, 66) is a cutout (52) in the rotor (6).

4. Machine (2) according to Claim 3, wherein the channel (52, 66) is concentric with respect to the center longitudinal axis (16) of the rotor (6).

5. Machine (2) according to one of the preceding claims, having a cooling tube (38), which passes through the equalization pressure container (50, 64), for transportation of cooling medium (42) into the area of the rotor winding (30) .

6. Machine (2) according to Claim 3 or 4 and 5, wherein the channel (52, 66) concentrically surrounds the cooling tube (38) .

7. Machine (2) according to one of the preceding claims, wherein the equalization pressure container (50, 64) is arranged at the non-drive end (B) of the rotor (6).

8. Machine (2) according to one of the preceding claims, wherein the rotor (6) has the same diameter (D) at the non-drive end (B) and at the drive end (A).

## Revendications

1. Machine (2) électrique, comprenant un rotor (6), qui comporte un arbre (18, 22), se trouvant à la température ambiante, et un enroulement (30) rotorique supraconducteur, monté fixe sur l'arbre (18, 22) et refroidi en fonctionnement à une température cryogénique, et comprenant un système (8) de refroidissement de l'enroulement (30) rotorique, qui comprend un récipient (50, 64) de compensation de la pression d'un fluide (42) de refroidissement,
**caractérisée en ce que** l'arbre (18, 22) est, au moins dans un tronçon (22), constitué sous la forme d'un arbre creux ayant un évidement (50) pour le récipient (50, 64) de compensation de la pression,
dans laquelle, ou bien le récipient (64) de compensation de la pression est disposé dans l'évidement (50) de la partie creuse de l'arbre (18, 22), ou bien l'évidement (50) forme le récipient (50, 64) de compensation de la pression.

2. Machine (2) suivant la revendication 1, dans laquelle l'évidement (50) est de forme cylindrique et est concentrique à l'axe (16) longitudinal médian du rotor (6).

3. Machine (2) suivant l'une des revendications précédentes, dans laquelle le récipient (50, 64) de compensation de la pression communique avec le reste du système (8) de refroidissement par un conduit (52, 66), le conduit (52, 66) étant un évidement (52) du rotor (6).

4. Machine (2) suivant la revendication 3, dans laquelle le conduit (52, 66) est concentrique à l'axe (16) longitudinal médian du rotor (6).

5. Machine (2) suivant l'une des revendications précédentes, comprenant un tube (38) de refroidissement traversant le récipient (50, 64) de compensation de la pression, pour transporter du fluide (42) réfrigérant dans la partie de l'enroulement (30) rotorique.

6. Machine (2) suivant la revendication 3 ou 4 et 5, dans laquelle le conduit (52, 66) entoure concentriquement le tube (38) de refroidissement.

7. Machine (2) suivant l'une des revendications précédentes, dans laquelle le récipient (50, 64) de compensation de la pression est disposé à l'extrémité B du côté (B) du rotor (6).

8. Machine (2) suivant l'une des revendications précédentes, dans laquelle le rotor (6) a, du côté B (B), le même diamètre (D) que du côté A (A).
